# EUROPÄISCHE PATENTANMELDUNG

(11) **EP 3 850 933 A1**
(43) Veröffentlichungstag der Anmeldung: **21.07.2021**
(21) Anmeldenummer: 21401002.7
(22) Anmeldetag: 13.01.2021
(51) Int. Cl.: A01C 5/06

(54) **DRUCKROLLE FÜR EINE SÄSCHARANORDNUNG UND SÄSCHARANORDNUNG**

(30) Priorität: 16.01.2020 DE 102020100911
(71) Anmelder: Amazonen-Werke H. Dreyer SE & Co. KG, 49205 Hasbergen (DE)
(72) Erfinder: Stier, Roy, 26121 Oldenburg (DE); Koch, Jens, 29525 Uelzen (DE); Kreilos, Maximilian, 37696 Marienmüster (DE)

(57) **Zusammenfassung**

Druckrolle (3) für eine Säscharanordnung (1), umfassend einen Felgenkörper (7) und ein Mantelelement (8), wobei der Felgenkörper (7) mittels eines Lagerelementes (9) um eine zumindest annährend horizontale Drehachse (D) lagerbar ist und dazu eingerichtet ist, das umlaufende Mantelelement (8) aufzunehmen, wobei das Mantelelement (8) zwei gegenüberliegende, vorzugsweise sich von der Drehachse (D) radial nach außen erstreckende, Flanken (8A, B) und eine sich zwischen den Flanken (8A, B) erstreckende Lauffläche (13) aufweist. Um eine Druckrolle (3) für eine Säscharanordnung (1) zu schaffen, welche, insbesondere unter schwierigen Bodenverhältnissen, prozesssicher einsetzbar ist und die vorbekannten Nachteile behebt, ist vorgesehen, dass die Lauffläche (13) abschnittsweise durch eine Mehrzahl axial und in Umfangsrichtung zueinander beabstandeter Erhebungen (14), die sich in radialer Richtung von der Lauffläche (13) nach außen erstrecken, unterbrochen ist.

## Beschreibung

Die Erfindung betrifft eine Druckrolle für eine Säscharanordnung gemäß dem Oberbegriff des Patentanspruches 1 und eine Säscharanordnung mit einer solchen Druckrolle gemäß dem Oberbegriff des Patentanspruches 13.

Eine derartige Druckrolle ist in DE 1 038 810 A2 beschrieben, wobei die EP 2 807 910 B1 die Verwendung einer solchen Druckrolle an einer Säscharanordnung als Furchenbedeckungs- und/oder Tiefenführungsrolle zeigt. Die Druckrolle umfasst einen stabilen Felgenkörper und ein elastisches Mantelelement. Der Felgenkörper ist mittels eines zentral angeordneten, zumeist als Kugellager ausgeführten Lagerelementes um eine zumindest annährend horizontale Drehachse lagerbar. Das Lagerelement dient somit der Anordnung der Druckrolle an der Säscharanordnung über einen geeigneten Tragarm.

Der Felgenkörper ist ferner dazu eingerichtet das umlaufende Mantelelement aufzunehmen. Hierzu ist der Felgenkörper hier zweiteilig ausgeführt, wobei ein Befestigungselement des Mantelelementes zwischen den zwei Felgenteilen eingequetscht wird. Das Mantelelement weist ferner zwei gegenüberliegende, sich von der Drehachse radial nach außen erstreckende Flanken auf. Zwischen diesen Flanken erstreckt sich eine ebene, also nicht profilierte, Lauffläche. Beim Abrollen der Druckrolle auf dem Boden können die Flanken sich elastisch verformen und der Boden unter der Druckrolle wird durch die darauf abrollende Lauffläche bearbeitet. Die Lauffläche erstreckt sich folglich im Wesentlichen parallel zur Drehachse.

Bei der Verwendung der Druckrolle in der Säscharanordnung, welche zum Ausbringen von Saatgut und/oder Dünger eingesetzt wird, kann die Druckrolle zur Tiefenführung und/oder Bodenbearbeitung eingesetzt werden. Hierzu ist die Druckrolle hinter einem als Doppelscheibenschar ausgeführten Bodenbearbeitungswerkzeug über den Tragarm an der Säscharanordnung befestigt und mittels des Lagerelementes um die horizontale Drehachse gelagert. Nachdem durch das Doppelscheibenschar eine sogenannte Säfurche im Boden geöffnet wurde, wird dieser Bearbeitungsstreifen zum Schließen der Säfurche und Andrücken von der Druckrolle überfahren nachdem das Saatgut und/oder der Dünger in der Säfurche abgelegt wurden. Die Druckrolle bedeckt die Säfurche hierzu wieder mit Boden und schließt diese so. Ferner kann das ausgebrachte Material und der die Furche bedeckende Boden angedrückt werden, wenn die Druckrolle mit geeignetem Schardruck niedergehalten wird.

Des Weiteren wird das als Doppelscheibenschar ausgeführte Bodenbearbeitungswerkzeug durch die Druckrolle in der Tiefe geführt. Entscheidend für die Bearbeitungstiefe des Bodenbearbeitungswerkzeuges ist hierbei dessen Anordnung relativ zur Druckrolle, welche auf dem Boden abrollt und somit eine Referenz für die Eindringtiefe in den Boden bilden kann. Die Druckrolle kann hierbei auch vor dem Bodenbearbeitungswerkzeug angeordnet sein, wobei sie in diesem Fall die Furche nicht schließen kann sondern ausschließlich der Tiefenführung und Vorverfestigung des Bearbeitungsstreifens, in dem die Säfurche liegt, dient.

Das Doppelscheibenschar ist ebenfalls über eine Lagerbaugruppe an die Säscharanordnung angebunden, wobei die beiden Scheiben v-förmig zueinander angestellt, drehbar gelagert sind. Die Lagerbaugruppe für das Doppelscheibenschar und der Tragarm für die Druckrolle werden an einem Hauptträger befestigt, welcher an seinem vorderen Ende einen Flansch zur Anordnung an einem quer zur Fahrtrichtung verlaufendem Tragbalken einer Sämaschine umfasst. Auf diese Weise lässt sich eine Mehrzahl von Säscharanordnungen nebeneinander an der Sämaschine anordnen.

Die elastische Ausführung des Mantelelementes sorgt durch Verformung der Flanken und/oder Lauffläche beim Abrollen dafür, dass die Druckrolle Erdmaterial hauptsächlich in axialer Richtung unter die Druckrolle fördert und angedrückt. Je nach Anordnung vor oder hinter dem Bodenbearbeitungswerkzeug sorgt die Druckrolle so dafür, dass entweder ausreichend vorverfestigtes Erdgut im Bearbeitungsstreifen zum sauberen Öffnen einer Säfurche vorhanden ist oder dass die Säfurche zuverlässig verschlossen, also mit Erdmaterial bedeckt und angedrückt, wird. Nachteilig ist hierbei jedoch, dass der Benutzer auf ausreichend fließfähige Bodenverhältnisse angewiesen ist, damit die Druckrolle zuverlässig funktioniert. Wenn die Druckrolle nicht ausreichend Erdmaterial unter sich fördert, weil der Boden bspw. stark haftet, besteht die Gefahr, dass die Säfurche zumindest teilweise geöffnet bleibt und das Korn anfällig ist für Vogelfraß und weitere negative, äußere Einflüsse.

In stark eingeschränktem Maße können nasse, bindige und somit wenig fließfähige Bodenverhältnisse ausgeglichen werden, indem der Schardruck auf die Druckrolle erhöht wird. Dies hat allerdings den erheblichen Nachteil, dass der Boden dadurch übermäßig verdichtet wird. Durch übermäßig verdichteten Boden kann die Sauerstoffzufuhr zum Korn abgeschnitten werden oder der Keimling schafft es nicht die verdichtete Schicht zu durchstoßen. In beiden Fällen wird, ebenso wie bei unzureichende Erdmaterialförderung durch die Druckrolle, der Feldaufgang und somit der Ertrag geschmälert. Der Benutzer ist somit auf geeignete Bodenverhältnisse angewiesen, was angesichts der knappen Zeitfenster zum Ausbringen von Saatgut im Zusammenhang mit zunehmenden Wetterextremen immer häufiger zum Problem wird.

Die Aufgabe der vorliegenden Erfindung ist es daher eine Druckrolle für eine Säscharanordnung zu schaffen, welche, insbesondere unter schwierigen Bodenverhältnissen, prozesssicher einsetzbar ist und die vorbekannten Nachteile behebt.

Erfindungsgemäß wird diese Aufgabe durch eine Druckrolle mit den Merkmalen des unabhängigen Patentanspruchs 1 gelöst. Merkmale vorteilhafter Weiterbildungen der Erfindung sind Gegenstand der abhängigen Ansprüche. So ist erfindungsgemäß vorgesehen, dass die Lauffläche abschnittsweise durch eine Mehrzahl axial und in Umfangsrichtung zueinander beabstandeter Erhebungen, die sich in radialer Richtung von der Lauffläche nach außen erstrecken, unterbrochen ist. Die bisher ebene Lauffläche ist somit insbesondere für den Einsatz unter schwierigen, wenig fließfähigen Bodenverhältnissen dahingehend verbessert, dass sie zusätzliche Erhebungen in radialer Richtung aufweist, welche beim Abrollen in den Boden schneiden und somit Erdmaterial in axialer Richtung unter die Druckrolle verdrängen, während die Lauffläche hierbei unterstützend wirkt und den so geförderten Boden in bekannter Weise andrückt.

Die Erfindung macht sich die Erkenntnis zunutze, dass der Boden durch die Verwendung von auf der Lauffläche angeordneten Erhebungen besser gekrümelt und somit wesentlich fließfähiger wird. Die Erhebungen quetschen den Boden nicht, wie bisher bekannt unter ausschließlicher Ausnutzung des Walkverhaltens des Mantelelementes, sondern schneiden in diesen ein, wodurch er in kleinere Teile getrennt und besser förderbar wird. Besonders vorteilhaft ist hierbei, dass die Druckrolle aufgrund der Beabstandung der Erhebungen in Axial- und Umfangsrichtung auch auf bindigen Böden verstopfungsfrei arbeitet. Dies ist zum einen dadurch bedingt, dass zwischen den Erhebungen ein ausreichender Abstand vorgesehen ist, welcher das Festsetzen von Erdklumpen an der Druckrolle vermindert, und zum anderen, da der Boden durch die verbesserte Krümelung weniger stark zum Anbacken neigt. Die Druckrolle rollt im Wesentlichen weiterhin über die Lauffläche ab, welche durch die Erhebungen lediglich unterbrochen ist. Besonders der Abstand zwischen den Erhebungen in axialer Richtung ist vorteilhaft, da der Boden in dieser Richtung verdrängt wird und somit weniger stark zum Anhaften an der Druckrolle neigt.

In einer vorteilhaften Weiterbildung der erfindungsgemäßen Andruckrolle ist vorgesehen, dass zumindest eine erste Gruppe von Erhebungen sich zumindest annährend unmittelbar an eine erste Flanke anschließt und zumindest eine zweite Gruppe von Erhebungen sich an die gegenüberliegende Flanke zumindest annährend unmittelbar anschließt. Da sich die erste und zweite Gruppe jeweils direkt an die gegenüberliegenden Flanken anschließen, ist der Abstand zwischen den Erhebungen in axialer Richtung somit größtmöglich geschaffen. Zwischen den Erhebungen der ersten und der zweiten Gruppe kann sich die Lauffläche weiterhin erstrecken, so dass die Druckrolle mittels der Lauffläche abrollt und unter die Druckrolle gefördertes Erdmaterial andrückt. Durch Anordnung der Erhebungen im Anschluss an die gegenüberliegenden Flanken ist der von der Druckrolle überrollte Bearbeitungsstreifen breit gestaltet, wodurch mehr Erdmaterial zur Förderung unter die Druckrolle zur Verfügung steht.

In einer weiteren besonders vorteilhaften Weiterbildung der erfindungsgemäßen Andruckrolle sind die erste Gruppe von Erhebungen und die zweite Gruppe von Erhebungen in Umfangsrichtung alternierend angeordnet. In Umfangsrichtung betrachtet ist zwischen zwei in Umfangsrichtung beabstandeten Erhebungen der ersten Gruppe folglich eine Erhebung der zweiten Gruppe an der gegenüberliegenden Flanke angeordnet, so dass sich die alternierende Anordnung ergibt. Es kann auf diese Weise vorgesehen sein, dass sämtliche Erhebungen zumindest annährend den gleichen Abstand zueinander aufweisen. In vorteilhafter Weise wird durch die alternierende Anordnung das Anhaftungsrisiko auch auf bindigen Böden weiter gesenkt.

Die erfindungsgemäße Druckrolle ist ferner vorteilhaft dadurch weitergebildet, dass eine Erhebung keilförmig ausgebildet ist. Der Querschnitt der Erhebung ist folglich im Anschluss an die Lauffläche radial nach außen abnehmend gestaltet, so dass sich ein Keil bildet dessen Spitze radial von der Drehachse betrachtet den Abschluss der Erhebung bildet. Insbesondere sind alle Erhebungen derart keilförmig ausgebildet. Vorzugsweise erstreckt sich ein Schenkel eines Keils senkrecht zur Drehachse, wobei der andere Schenkel somit eine schräge Leitfläche ausbildet. Durch Ausbildung einer Erhebung in Keilform erlangt sie eine verbesserte Schneid- und Förderwirkung. Der Widerstand des Bodens bei Eindringen der Erhebungen ist reduziert, da sie mit der Spitze voran eine verbesserte Schneidwirkung auf den Boden entfaltet. Ferner lässt sich durch geeignete Gestaltung der Keilform die Förderwirkung in axialer Richtung verbessern, indem die Schenkel in einem Winkel zueinander angeordnet werden, so dass Erdmaterial unter die Druckrolle verdrängt wird. Beispielsweise kann ein sich der Flanke anschließender Schenkel senkrecht zur Drehachse vorgesehen sein, sodass der jeweils andere Schenkel schräg zur Mitte der Lauffläche verläuft.

Die erfindungsgemäße Druckrolle ist weiter besonders vorteilhaft dadurch weitergebildet, dass die Erhebung von der Lauffläche in Richtung einer der Flanken eine annährend dreieckförmig abnehmende Grundform aufweist und so eine Leitfläche in einem Winkel von 15 bis 80 Grad, vorzugsweise 30 bis 65 Grad, besonders vorzugsweise 40 bis 50 Grad mit der Drehachse ausbildet. Die Lauffläche erstreckt sich vorzugsweise zumindest annährend parallel zur Drehachse. Die Lauffläche und der dem Winkel zwischen Leitfläche und Drehachse gegenüberliegende Schenkel der dreieckförmigen Grundform stehen vorzugsweise zumindest annährend orthogonal zueinander. In vorteilhafter Weise ergibt sich so ein zweckmäßiges Gleichgewicht zwischen Schneid- und Förderwirkung für die Erhebung bzw. die Erhebungen. Die Erhebung kann einen Radius an seinem radial äußeren Ende, sprich an der Spitze, aufweisen. Die Leitfläche kann gekrümmt ausgebildet sein.

Um die Keilwirkung am Ansatz der Erhebung in vorteilhafter Weise zu reduzieren, ist in einer Weiterbildung der erfindungsgemäßen Druckrolle der Übergang zwischen der Lauffläche und einer Erhebung fließend, vorzugsweise als Radius, ausgeführt. Da durch den Boden in axialer Richtung Widerstandskräfte auf die Erhebung wirken, ist infolge dieser Maßnahme das Risiko ausbrechender Erhebungen reduziert und die Druckrolle somit besonders langlebig gestaltet. Ferner ist die Förderwirkung in axialer Richtung unter die Druckrolle durch den fließenden Übergang zwischen Lauffläche und Erhebung verbessert.

In einer weiteren vorteilhaften Weiterbildung der Erfindung ist vorgesehen, dass das Mantelelement als insbesondere nicht aufblasbarer Luftreifen ausgeführt ist. Infolge dieser Maßnahme ist das Walkverhalten der Druckrolle dahingehend verbessert, dass es eine Synergie mit den Erhebungen entfaltet. Die Förderwirkung der Erhebungen wird durch Walken der Flanken und/oder Lauffläche beim Abrollen infolge der Gestaltung des Mantelelementes als Luftreifen verbessert. Ferner reduziert sich durch die elastische Verformbarkeit des Mantelelements bei dieser Weiterbildung das Risiko von Anhaftungen an der Druckrolle. Durch elastische Verformung, also Walken, des Mantelelements werden beim Abrollen anhaftende Erdklumpen abgeschüttelt.

Die erfindungsgemäße Druckrolle ist ferner vorteilhaft weitergebildet, indem die erste und zweite Gruppen von Erhebungen bei Abrollen der Druckrolle auf dem Boden dazu eingerichtet sind, sich einander zumindest in axialer Richtung anzunähern. Die Kombination gegenüberliegend angeordneter Erhebungen mit einem walkfähigen Mantelelement entfaltet eine besondere Synergie, nämlich entsteht eine Schaufelwirkung der Erhebungen. Beim Abrollen der Druckrolle auf dem Boden können die Flanken und/oder Lauffläche der Druckrolle derart walken, dass die Erhebungen sich aufeinander zu bewegen und dabei Erdmaterial in axialer Richtung unter die Druckrolle fördern. Die Förderwirkung ist somit in überraschender Weise besonders gesteigert. Es kann sich eine aktive Förderung von Erdmaterial in Richtung der Furche durch Verformung des Mantelelementes einstellen.

Ein besonders zuverlässiger Antrieb der Druckrolle beim Abrollen auf dem Boden und somit prozesssicherer Einsatz auch unter schwierigen Bodenbedingungen wird in einer Weiterbildung dadurch erreicht, dass eine Erhebung bei Bearbeitung des Bodens durch die Druckrolle dazu eingerichtet ist, eine tangential am Umfang der Druckrolle angreifende Widerstandskraft hervorzurufen. Infolge der tangential am Umfang angreifenden Widerstandskraft entsteht ein Drehmoment um die Drehachse, so dass die Druckrolle auch auf sehr bindigen, klebrigen Böden zuverlässig angetrieben wird und nicht schleift oder schiebt. Besonders unter suboptimalen Bedingungen neigen bisher bekannte Druckrollen, insbesondere aufgrund einer ebenen Lauffläche, dazu stehen zu bleiben, da der Rollwiderstand nicht ausreicht um die Druckrolle anzutreiben. Diese Weiterbildung ist dahingehend verbessert, dass eine Widerstandskraft zusätzlich zum Rollwiderstand hervorgerufen wird und somit der Antrieb der Druckrolle gewährleistet ist.

In einer weiteren vorteilhaften Weiterbildung der Erfindung weist die Erhebung in radialer Richtung eine Höhe von zumindest 0,5% bis 10%, vorzugsweise 1% bis 7%, besonders vorzugsweise 2% bis 4% des Durchmessers der Lauffläche auf. Untersuchungen haben gezeigt, dass die Höhe in diesem Bereich vorteilhaft ist, um die Lauffläche dahingehend weiterzubilden, dass durch die Erhebungen zusätzlich eine Schneidwirkung eintritt. In vorstehend beschriebener Weise ist die Bodenbearbeitung durch die erfindungsgemäße Druckrolle somit verbessert.

Um die Aufnahme des Mantelelementes am Felgenkörper besonders zuverlässig zu gestalten, weist in einer Weiterbildung das Mantelelement ferner ein annährend schwalbenschwanzförmiges Befestigungselement auf, wobei der Felgenkörper dazu eingerichtet ist, das Befestigungselement zu hintergreifen und/oder einzuklemmen. Durch die Schwalbenschwanzform des Befestigungselementes ist die Aufnahme dahingehend verbessert, dass das Mantelelement sowohl in axialer als auch in radialer Richtung zuverlässig am Felgenkörper befestigt ist. Der Felgenkörper kann zweiteilig, also in zwei Felgenhälften, ausgeführt sein, wobei jede Felgenhälfte im Bereich der Aufnahme ein Felgenhorn aufweist, mittels derer der Felgenkörper im zusammengesetzten Zustand das Befestigungselement hintergreift. Insbesondere durch Verspannung der beiden Felgenhälften gegeneinander kann das Befestigungselement zusätzlich oder alternativ eingeklemmt werden. Da durch die mittels der Erhebungen unterbrochene Lauffläche erhöhte Axialkräfte auf das Mantelelement wirken, ist die Aufnahme am Felgenkörper infolge dieser Weiterbildung zweckmäßig verbessert.

Eine weitere vorteilhafte Weiterbildung der erfindungsgemäßen Druckrolle ergibt sich dadurch, dass das Mantelelement einen insbesondere nicht aufblasbaren Schlauch umschließt, wobei der Schlauch ein Verhältnis von Breite zu Höhe zwischen 2:1 und 5:1 aufweist. Untersuchungen haben gezeigt, dass sich in überraschender Weise bei diesem Verhältnis eine besonders zweckmäßige Mischung aus Stabilität und Walkarbeit für das Mantelelement einstellt.

Die erfindungsgemäße Aufgabe wird ferner durch eine Säscharanordnung der eingangs genannten Art gelöst, wobei die Druckrolle gemäß zumindest einer der vorstehend beschriebenen Ausführungsformen ausgeführt ist. Hinsichtlich der Vorteile und Varianten der Säscharanordnung wird zunächst auf die Vorteile und Ausführungsformen der erfindungsgemäßen Druckrolle verwiesen.

Weitere Einzelheiten der Erfindung sind der Beispielsbeschreibung und den Zeichnungen zu entnehmen. Die Zeichnungen zeigen
- Fig.1: eine erfindungsgemäße Säscharanordnung mit einer ersten Ausführungsform einer erfindungsgemäßen Druckrolle in perspektivischer Ansicht,
- Fig.2: die Druckrolle gemäß Fig.1 in perspektivischer Einzelansicht,
- Fig.3: die Druckrolle gemäß Fig.1, 2 in Draufsicht,
- Fig.4: die Druckrolle gemäß Fig.1 bis 3 in Schnittansicht,
- Fig.5: eine zweite Ausführungsform der erfindungsgemäßen Druckrolle in perspektivischer Ansicht,
- Fig.6: die Druckrolle gemäß Fig.5 in Draufsicht, und
- Fig.7: die Druckrolle gemäß Fig.5, 6 in Schnittansicht.

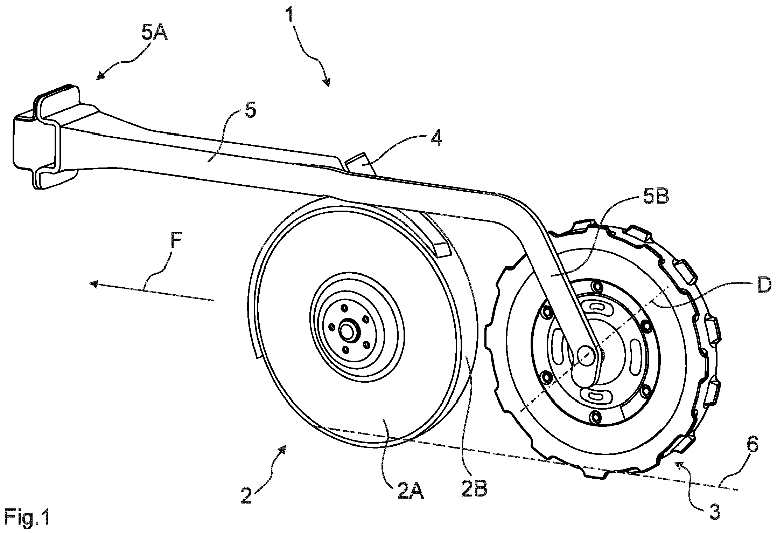

Eine erfindungsgemäße Säscharanordnung 1 zum Ausbringen von Saatgut und/oder Dünger ist in Fig.1 zu sehen. Die Säscharanordnung 1 umfasst ein als Doppelscheibenschar 2 ausgeführtes Bodenbearbeitungswerkzeug und eine in Fahrtrichtung F dahinter angeordnete, erste Ausführungsform einer Druckrolle 3. Das Doppelscheibenschar 2 setzt sich zusammen aus zwei v-förmig zueinander angestellten Schneidscheiben 2A, B welche jeweils drehbar gelagert sind. Zwischen den Schneidscheiben 2A, B ist eine Saatgutleitung 4 und eine Halterung zur Befestigung des Doppelscheibenschares 2 an einem Hauptträger 5 der Säscharanordnung 1 angeordnet.

Der Hauptträger 5 weist an seinem vorderen Ende eine Schelle 5A auf, welche der Befestigung der Säscharanordnung 1 an einem nicht gezeigten, sich quer zur Fahrtrichtung F erstreckenden Trägerbalken einer Sämaschine dient. An dem hinteren Ende des Hauptträgers 5 erstreckt dieser sich in Form eines Haltearms 5B, an dessen freien Ende die Druckrolle 3 angeordnet ist. Die Druckrolle 3 ist an dem freien Ende des Haltearms 5B um eine zumindest annährend horizontale Drehachse D gelagert und hinter dem Doppelscheibenschar 2 angeordnet, so dass die Druckrolle 3 den gleichen Bearbeitungsstreifen 6 wie das Doppelscheibenschar 2 bearbeitet.

Durch Eindringen der Schneidscheiben 2A, B in den Boden öffnen diese eine Säfurche im Bearbeitungsstreifen 6. Über die Saatgutleitung 4 zugebrachtes Saatgut und/oder Dünger wird in diese Säfurche abgegeben. Anschließend wird der Bearbeitungsstreifen 6 zum Schließen der Säfurche und Andrücken des ausgebrachten Materials und die Furche bedeckenden Erdmaterials von der Druckrolle 3 überrollt. Die Druckrolle 3 fördert hierbei Erdmaterial in axialer Richtung, also quer zur Fahrtrichtung F, um in der Säfurche befindliches Material zu bedecken und diese so zuverlässig zu schließen. Ferner wird der Bearbeitungsstreifen 6 durch die Druckrolle 3 leicht rückverdichtet, so dass sich gute Keimbedingungen ergeben.

Die Druckrolle 3 dient ferner der Tiefenführung des Doppelscheibenschares 2. In der in Fig.1 gezeigten Ausführungsform sind das Doppelscheibenschar 2 und die Druckrolle 3 in einer starren Anordnung zueinander am Hauptträger 5 befestigt. Das Doppelscheibenschar 2 ist in diesem Fall gegenüber der Druckrolle 3 etwas tiefer angeordnet, so dass die Druckrolle 3 auf dem Bodenhorizont abrollen kann und das Doppelscheibenschar 2 demgegenüber teilweise in den Boden eindringt, um die Säfurche zu öffnen. In einer nicht gezeigten Ausführungsform können das Doppelscheibenschar 2 und die Druckrolle 3 gegeneinander verstellbar sein, so dass die Arbeitstiefe des Doppelscheibenschares 2 einstellbar ist. In ebenfalls nicht gezeigter Weise kann die Druckrolle 3 zur Tiefenführung des Doppelscheibenschares 2 in Fahrtrichtung F vor dem Doppelscheibenschar 2 angeordnet sein, wobei die Furche in diesem Fall durch zusätzliche Mittel geschlossen wird.

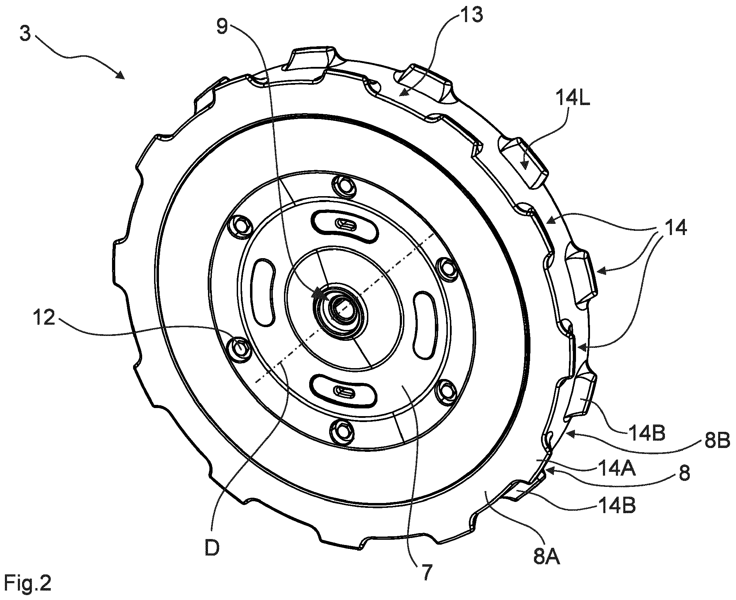

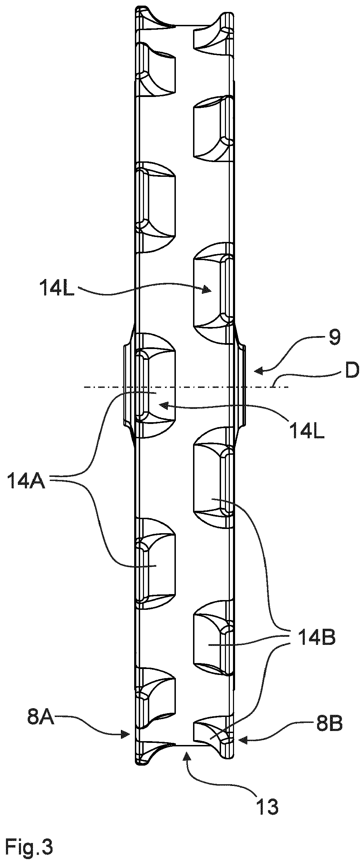

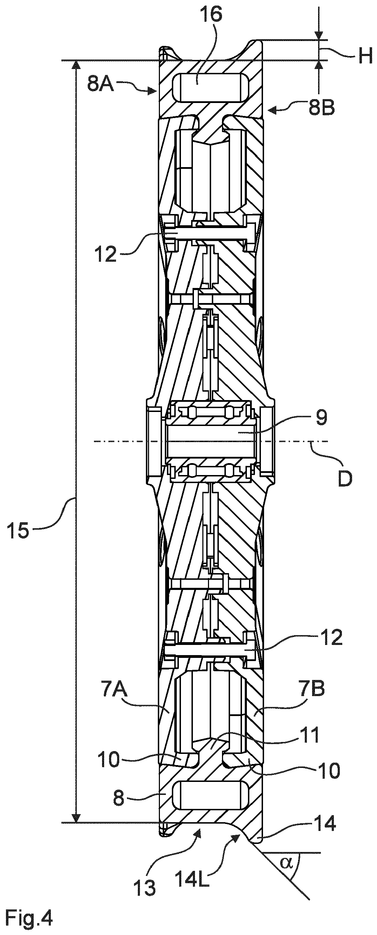

In Fig.2, 3 und 4 ist die Druckrolle 3 gemäß Fig.1 in verschiedenen Ansichten zu sehen. Die Druckrolle 3 umfasst einen Felgenkörper 7 und ein Mantelelement 8. Der Felgenkörper 7 weist zentral ein als Kugellager 9 ausgeführtes Lagerelement auf, mittels dem die Druckrolle 3 um die zumindest annährend horizontale Drehachse D lagerbar ist. Das umlaufende Mantelelement 8 ist an dem Felgenkörper 7 aufgenommen. Hierzu ist der Felgenkörper 7 zumindest zweiteilig in zwei Felgenhälften 7A, B ausgeführt, wie in Fig.4 zu sehen ist. Die Felgenhälften 7A, B weisen an ihrem äußeren Ende ein umlaufendes Felgenhorn 10 auf. Bei der Montage werden die Felgenhälften 7A, B mit dem Mantelelement 8 zusammengesetzt, so dass die Felgenhörner 10 ein ebenfalls umlaufendes schwalbenschwanzförmiges Befestigungselement 11 des Mantelelementes 8 hintergreifen und dieses zwischen sich einklemmen. Die Felgenhälften 7A, B werden mit Hilfe als Schrauben 12 ausgeführter lösbarer Sicherungsmittel gegeneinander gesichert, so dass sich die Druckrolle 3 ergibt.

Das Mantelelement 8 ist als nicht aufblasbarer Luftreifen ausgeführt und weist zwei gegenüberliegende Flanken 8A, B auf, welche sich von der Drehachse D radial nach außen erstrecken. Zwischen den Flanken 8A, B liegt eine Lauffläche 13 über die die Druckrolle 3 auf dem Boden abrollt und den Bearbeitungsstreifen 6 bearbeitet. Die Lauffläche 13 ist abschnittsweise durch eine Mehrzahl axial und in Umfangsrichtung zueinander beabstandeter, keilförmiger Erhebungen 14 unterbrochen. Die zackenartigen Erhebungen 14 erstrecken sich von der Lauffläche 13 in radialer Richtung, in der sie spitz zulaufen. Die Spitze der Erhebungen 14 ist in diesem Fall abgerundet.

Eine erste Gruppe 14A von Erhebungen 14 schließt sich an die linke, erste Flanke 8A zumindest annährend unmittelbar an und eine zweite Gruppe 14B von Erhebungen 14 schließt sich an die rechte, zweite Flanke 8B zumindest annährend unmittelbar an. Die erste Gruppe 14A und zweite Gruppe 14B sind in Umfangsrichtung alternierend angeordnet, so dass sich zwischen sämtlichen Erhebungen 14 zumindest annährend der gleiche Abstand in Axial- und Umfangsrichtung ergibt. Die Erhebungen 14 der ersten und zweiten Gruppe 14A, B sind bei dieser ersten Ausführungsform der Druckrolle 3 gemäß Fig. 1 bis 4 in Umfangsrichtung zumindest annährend um die Breite einer Erhebung 14 voneinander beabstandet, so dass zwischen zwei Erhebungen 14 der ersten Gruppe 14A jeweils eine Erhebung 14 der zweiten Gruppe 14B angeordnet sich zumindest eine Erhebung 14 bei der Bodenbearbeitung stets in Bodenkontakt befindet.

Wie besonders in Fig.4 deutlich zeigt, weisen die Erhebungen 14 eine von der Lauffläche 13 in Richtung der Flanke 8A, B, an die sie sich anschließen, dreieckförmig abnehmende Grundform auf und bilden so eine Leitfläche 14L in einem Winkel α mit der Drehachse D aus. Der Winkel α beträgt im vorliegenden Ausführungsbeispiel zumindest annährend 45 Grad, wobei der Winkel α hilfsweise an einer Parallelen zur Drehachse D angetragen ist. Der sich an die jeweilige Flanke 8A, B anschließende Schenkel der Erhebungen 14 erstreckt sich zumindest annährend orthogonal zur Drehachse D. Durch diese keilförmige Ausgestaltung erlangen die Erhebungen 14 eine besonders ausgeprägte Schneidwirkung beim Abrollen der Druckrolle 3 auf dem Boden über die Lauffläche 13. Während die Lauffläche 13 auf dem Boden abrollt dringen die Erhebungen 14 zumindest teilweise in den Boden ein und krümeln das Erdmaterial. Jeder der Erhebungen 14 ist so bei der Bearbeitung des Bodens durch die Druckrolle 3 dazu eingerichtet, eine Widerstandskraft, welche tangential am Umfang der Druckrolle 3 angreift, hervorzurufen und die Druckrolle 3 somit mit einem antreibenden Drehmoment um die Drehachse D zu belasten. Zudem leiten die Erhebungen 14 hierbei das Erdmaterial mittels der Leitflächen 14L vermehrt unter die Druckrolle 3, wodurch ein zuverlässiges Schließen der Säfurche erreicht wird.

Verstärkt wird diese Förderwirkung dadurch, dass die erste und zweite Gruppe 14A, B von Erhebungen 14 beim Abrollen der Druckrolle 3 infolge von elastischer Verformung dazu eingerichtet sind, sich einander zumindest in axialer Richtung anzunähern. Durch Walken des Mantelelementes 8 entsteht folglich mittels der Erhebungen 14 eine Schaufelwirkung, welche bewirkt dass Boden in die Mitte des Bearbeitungsstreifens 6 gefördert wird.

Um die Keilwirkung zwischen der Lauffläche 13 und den Erhebungen 14 zu reduzieren ist ihr Übergang jeweils mittels eines Radius fließend ausgeführt. Zudem kann das geförderte Erdmaterial so besser über die Leitfläche 14L zur Lauffläche 13 gleiten.

Mit Verweis auf Fig.4 ist zu erkennen, dass die Erhebungen 14 in radialer Richtung eine Höhe H von zumindest annährend 2,5% des Durchmessers 15 der Lauffläche 13 aufweisen. Die Erhebungen 14 weisen damit im Verhältnis zum Durchmesser 15 der Lauffläche 13 eine Höhe H auf, welche die vorstehend beschriebene Schneid- und Förderwirkung begünstigt. Ferner ist zu erkennen, dass das Mantelelement 8 einen nicht aufblasbaren Schlauch 16 umschließt, wobei der Schlauch 16 ein Verhältnis von Breite zu Höhe von annährend 2:1 aufweist. Die Gestaltung des Schlauches 16 in diesem Verhältnis bewirkt für die schmale erste Ausführungsform der Druckrolle 3 eine geeignete Mischung aus Stabilität und Walkarbeit.

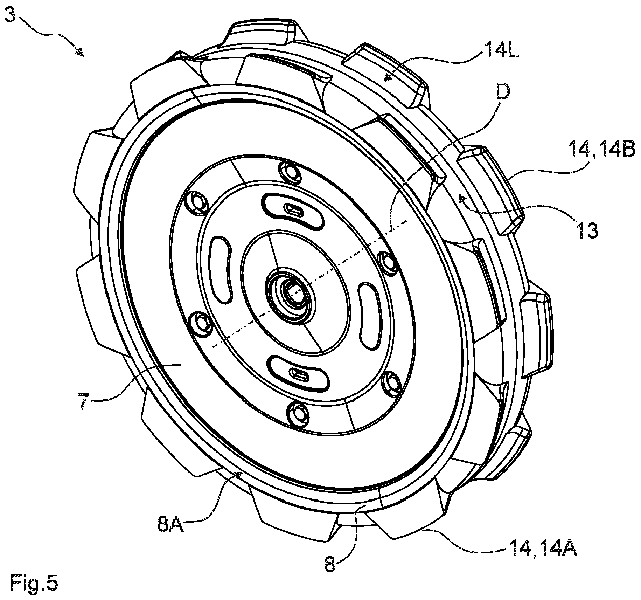

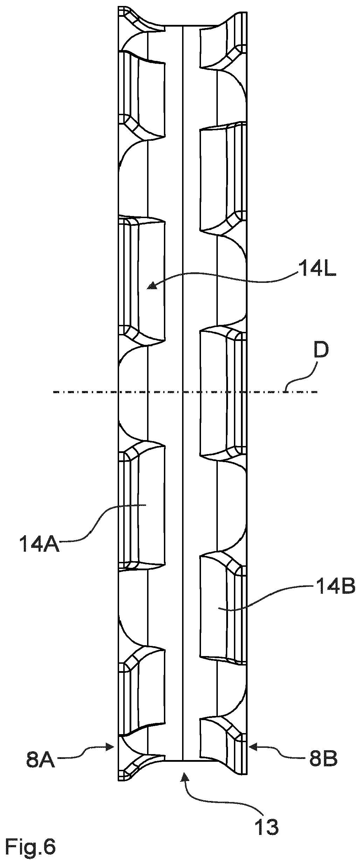

Die Fig.5, 6 und 7 zeigen eine zweite, im Vergleich zur ersten Ausführungsform breitere Ausgestaltung der Druckrolle 3. Gleiche Teile wurden hierbei mit gleichen Bezugsziffern gekennzeichnet. Beide Ausführungsformen entsprechen dem Erfindungsgedanken und sind somit zumindest teilweise gleichartig ausgebildet, wobei im Folgenden im Wesentlichen auf die Unterschiede eingegangen werden soll. Die Lauffläche 13 dieser zweiten Ausführungsform der Druckrolle 3 ist breiter ausgebildet, wodurch sich in axialer Richtung zwischen den Erhebungen 14 ein vergrößerter Abstand ergibt. Im Umfangsrichtung hingegen überschneiden sich die Erhebungen 14 der ersten und zweiten Gruppe 14A, B zumindest teilweise, das heißt die erste und zweite Gruppe 14A, B sind alternierend angeordnet aber liegen sich abschnittsweise gegenüber, wie besonders Fig.6 zeigt. Ferner ist die Lauffläche 13 zu den Flanken 8A, B abgerundet ausgebildet, wobei sich die Erhebungen 14 der ersten und zweiten Gruppe 14A, B weiterhin zumindest annährend unmittelbar an die Flanken 8A, B anschließen und dieser anschließende Schenkel der Erhebungen 14 zumindest annährend orthogonal zur Drehachse D steht.

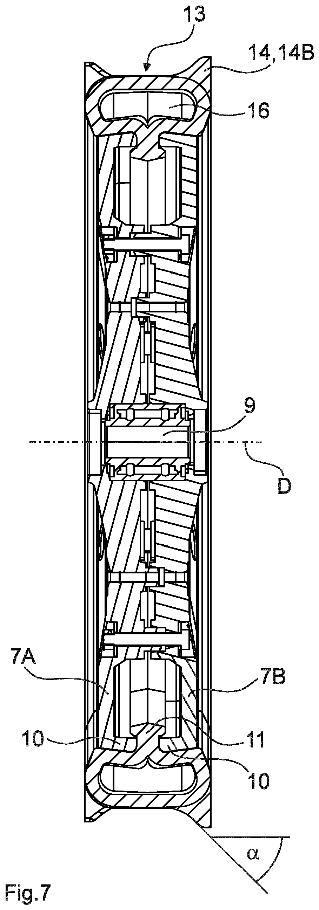

Mit Bezug insbesondere auf Fig.7 ist zu sehen, dass die Leitfläche 14L der zweiten Ausführungsform in einem flacheren Winkel α mit der Drehachse D ausgebildet ist. **Der Winkel α beträgt hier zumindest annährend 40 Grad. Ferner ist** zu erkennen, dass das Mantelelement 8 den nicht aufblasbaren Schlauch 16 in sich aufnimmt, dessen Verhältnis von Breite zu Höhe annährend 3:1 beträgt.

### Bezugszeichenliste

- 1: Säscharanordnung
- 2: Doppelscheibenschar
- 2A, B: Schneidscheiben
- F: Fahrtrichtung
- 3: Druckrolle
- 4: Saatgutleitung
- 5: Hauptträger
- 5A: Schelle
- 5B: Haltearm
- D: Drehachse
- 6: Bearbeitungsstreifen
- 7: Felgenkörper
- 7A, B: Felgenhälfte
- 8: Mantelelement
- 8A, B: Flanke
- 9: Kugellager
- 10: Felgenhorn
- 11: Befestigungselement
- 12: Schraube
- 13: Lauffläche
- 14: Erhebung
- 14A: erste Gruppe (von Erhebungen)
- 14B: zweite Gruppe (von Erhebungen)
- 14L: Leitfläche
- 15: Durchmesser (Lauffläche)
- H: Höhe (Erhebung(en))
- 16: Schlauch

## Patentansprüche

1. Druckrolle (3) für eine Säscharanordnung (1), umfassend einen Felgenkörper (7) und ein Mantelelement (8), wobei der Felgenkörper (7) mittels eines Lagerelementes (9) um eine zumindest annährend horizontale Drehachse (D) lagerbar ist und dazu eingerichtet ist, das umlaufende Mantelelement (8) aufzunehmen, wobei das Mantelelement (8) zwei gegenüberliegende, vorzugsweise sich von der Drehachse (D) radial nach außen erstreckende, Flanken (8A, B) und eine sich zwischen den Flanken (8A, B) erstreckende Lauffläche (13) aufweist, **dadurch gekennzeichnet, dass** die Lauffläche (13) abschnittsweise durch eine Mehrzahl axial und in Umfangsrichtung zueinander beabstandeter Erhebungen (14), die sich in radialer Richtung von der Lauffläche (13) nach außen erstrecken, unterbrochen ist.

2. Druckrolle (3) nach Anspruch 1, **dadurch gekennzeichnet, dass** zumindest eine erste Gruppe (14A) von Erhebungen (14) sich zumindest annährend unmittelbar an eine erste Flanke (8A) anschließt und zumindest eine zweite Gruppe (14B) von Erhebungen (14) sich an die gegenüberliegende Flanke (8B) zumindest annährend unmittelbar anschließt.

3. Druckrolle (3) nach Anspruch 2, **dadurch gekennzeichnet, dass** die erste Gruppe (14A) von Erhebungen (14) und die zweite Gruppe (14B) von Erhebungen (14) in Umfangsrichtung alternierend angeordnet sind.

4. Druckrolle (3) nach zumindest einem der vorstehenden Ansprüche, **dadurch gekennzeichnet, dass** eine Erhebung (14) keilförmig ausgebildet ist.

5. Druckrolle (3) nach Anspruch 4, **dadurch gekennzeichnet, dass** die Erhebung (14) von der Lauffläche (13) in Richtung einer der Flanken (8A, B) eine annährend dreieckförmig abnehmende Grundform aufweist und so eine Leitfläche (14L) in einem Winkel (a) von 15 bis 80 Grad, vorzugsweise 30 bis 65 Grad, besonders vorzugsweise 40 bis 50 Grad mit der Drehachse (D) ausbildet.

6. Druckrolle (3) nach zumindest einem der vorstehenden Ansprüche, **dadurch gekennzeichnet, dass** der Übergang zwischen der Lauffläche (13) und einer Erhebung (14) fließend, vorzugsweise als Radius, ausgeführt ist.

7. Druckrolle (3) nach zumindest einem der vorstehenden Ansprüche, **dadurch gekennzeichnet, dass** das Mantelelement (8) als insbesondere nicht aufblasbarer Luftreifen ausgeführt ist.

8. Druckrolle (3) nach den Ansprüchen 2 und 7, **dadurch gekennzeichnet, dass** die erste und zweite Gruppen (14A, B) von Erhebungen (14) bei Abrollen der Druckrolle (3) auf dem Boden dazu eingerichtet sind, sich einander zumindest in axialer Richtung anzunähern.

9. Druckrolle (3) nach zumindest einem der vorstehenden Ansprüche, **dadurch gekennzeichnet, dass** eine Erhebung (14) bei Bearbeitung des Bodens durch die Druckrolle (3) dazu eingerichtet ist, eine tangential am Umfang der Druckrolle (3) angreifende Widerstandskraft hervorzurufen.

10. Druckrolle (3) nach zumindest einem der vorstehenden Ansprüche, **dadurch gekennzeichnet, dass** die Erhebung (14) in radialer Richtung eine Höhe (H) von zumindest 0,5% bis 10%, vorzugsweise 1% bis 7%, besonders vorzugsweise 2% bis 4% des Durchmessers (15) der Lauffläche (13) aufweist.

11. Druckrolle (3) nach zumindest einem der vorstehenden Ansprüche, **dadurch gekennzeichnet, dass** das Mantelelement (8) ein annährend schwalbenschwanzförmiges Befestigungselement (11) aufweist, dass der Felgenkörper (7) dazu eingerichtet ist das Befestigungselement (11) zu hintergreifen und/oder einzuklemmen.

12. Druckrolle (3) nach zumindest einem der vorstehenden Ansprüche, **dadurch gekennzeichnet, dass** das Mantelelement (8) einen insbesondere nicht aufblasbaren Schlauch (16) umschließt, dass der Schlauch (16) ein Verhältnis von Breite zu Höhe zwischen 2:1 und 5:1 aufweist.

13. Säscharanordnung (1) zum Ausbringen von Saatgut und/oder Dünger umfassend zumindest ein, vorzugsweise als Doppelscheibenschar (2) ausgeführtes, Bodenbearbeitungswerkzeug (2) zum Öffnen einer Säfurche und eine Druckrolle (3), wobei die Druckrolle (3) in Fahrtrichtung (F) hinter oder vor dem Bodenbearbeitungswerkzeug (2) um eine zumindest annährend horizontale Drehachse (D) drehbar gelagert ist zur Tiefenführung des Bodenbearbeitungswerkzeuges (2) und/oder zum Schließen der Säfurche und Andrücken des ausgebrachten Materials und/oder die Furche bedeckendem Erdmaterials, **dadurch gekennzeichnet, dass** die Druckrolle (3) nach einem der Ansprüche 1 bis 12 ausgeführt ist.
